# EUROPÄISCHE PATENTANMELDUNG

(11) **EP 0 968 810 A1**
(43) Veröffentlichungstag der Anmeldung: **05.01.2000**
(21) Anmeldenummer: 99112312.6
(22) Anmeldetag: 26.06.1999
(51) Int. Cl.: B29C 47/86, B29C 47/30, D01D 1/09, D01D 1/06

(54) **Heizsystem für schmelzeführende Teile**

(30) Priorität: 01.07.1998 DE 19829272
(71) Anmelder: RIETER AUTOMATIK GmbH, D-63757 Grossostheim (DE)
(72) Erfinder: Rohm, Wolfgang, 63762 Grossostheim (DE); Glawion, Erwin, 63762 Grossostheim (DE)
(74) Vertreter: Canzler, Rolf, Dipl.-Ing.

(57) **Zusammenfassung**

Eine Vorrichtung zum Extrudieren eines geschmolzenen polymeren Materials, beispielsweise zu einer Vielzahl von Fäden oder auch Folien oder sonstigen Extrudaten, weist Verteilerkanäle auf, über die das geschmolzene Material Extrudierdüsen zugeführt wird, sowie Heizeinrichtungen, um den Materialfluß bis zum Austritt aus den Extrudierdüsen auf der für das Extrudieren erforderlichen Temperatur zu halten. Es ist ein Grundkörper 1, 13 vorgesehen, der mindestens die Verteilerkanäle 4, 41 die Aufnahmen 5, 3 für die Extrudierpumpe und für die Extrudierdüsen 20 enthält. An den schmelzeführenden Teilen 4, 41, 2, 12 sind Heizelemente 6, 9, 11 angeordnet, die in einen den Grundkörper 1, 13 umgebenden Mantel 8 eingegossen sind.

## Beschreibung

Die Erfindung betrifft eine Vorrichtung zum Extrudieren eines geschmolzenen polymeren Materials beispielsweise zu einer Vielzahl von Fäden oder auch zu Folien oder sonstigen Extrudaten, wobei diese Vorrichtung Verteilerkanäle, über die das geschmolzene Material Extrudierdüsen zugeführt wird, sowie Heizeinrichtungen aufweist, um den Materialfluß bis zum Austritt aus den Extrudierdüsen auf der für das Extrudieren erforderlichen Temperatur zu halten.

Filamente aus fadenbildenden Polymeren wie Polyester, Polyamiden und Polyolefinen werden üblicherweise nach dem Schmelzespinnverfahren hergestellt. Bei diesem Verfahren werden die Polymere in einem Estruder aufgeschmolzen und homogenisiert und anschließend durch eine Schmelzeleitung Spinnpumpen zugeführt, die die Schmelze durch Düsenbohrungen pressen. Die aus den Spinndüsen austretenden Filamente werden durch einen Luftstrom kontinuierlich abgekühlt. Die so erzeugten Filamente werden anschließend präpariert, zu einem Kabel zusammengefaßt, verstreckt, texturiert und aufgewickelt.

Hierbei haben die ersten Stufen des Prozesses großen Einfluß auf die folgenden Prozeßstufen hinsichtlich der Produktqualität, so daß bereits vor oder während der Fadenbildung die endgültige Qualität der Fäden oder Stapelfasern entscheidend bestimmt wird.

Dies fängt bereits bei der Extrusion an, die eine möglichst homogene Schmelze bezüglich der Temperaturverteilung und ggfs. auch der Verteilung von Additiven liefern soll. Die Schmelzeverteilung auf die Düsenbohrungen erfolgt deshalb üblicherweise über ein exakt abgestuftes Leitungssystem mit möglichst gleichen Leitungslängen für alle Spinnpumpen. Eine gleichbleibende Temperatur wird durch eine möglichst gleichmäßige Beheizung aller Leitungsabechnitte gewährleistet. Zahnradpumpen mit frequenzgeregelten Antrieben stellen die exakte Dosierung der einzelnen Volumenströme zu den Düsenbohrungen sicher.

In der Praxis werden je nach Einsatz verschiedene Formen der Spinndüsenpakete, nämlich Rechteck-, Ring- und Runddüsenpakete verwendet, für die wiederum eine möglichst gleichmäßige Schmelzeverteilung über die gesamte Austrittsfläche der Düsen sichergestellt sein muß. Für das Extrudieren von Folien werden Schlitzdüsen verwendet. Aber auch hier muß über die gesamte Austrittefläche der Düsen eine gleichmäßige Schmelzeverteilung garantiert sein, um ein einwandfreies Produkt herstellen zu können.

Diese Extrudiervorrichtungen funktionieren jedoch nur dann einwandfrei, wenn alle Kanäle die gleiche Temperatur besitzen, da ansonsten sich aufgrund der Temperaturdifferenzen Unterschiede in der Fließfähigkeit der Polymere einstellen und die Schmelze nach dem Prinzip des geringsten Widerstandes bevorzugt durch die wärmeren Kanäle strömt. Dies äußert sich in deutlichen Unterschieden im Titer oder Folienstärke und wird im Endprodukt durch den Variationskoeffizienten ausgedrückt. Außerdem wird durch derartige Temperaturungleichmäßigkeiten die Verstreckbarkeit nachteilig beeinflußt, so daß hochwertige Produktqualitäten kaum hergestellt werden können.

Aus der DE 21 20 600 C 3 ist beispielsweise eine Schmelzspinnanlage bekannt, die aus mindestens einer Schneckenpresse oder Pumpe, Schmelzerverteilungsleitungen und mehreren Spinnköpfen besteht, wobei die in Längsrichtung der Schmelzspinnanlage verlaufenden Schmelzverteilerleitungen in einem durch Diphenyldampf beheizten, teilweise mit flüssigem Diphenyl gefüllten Behälter angeordnet sind. Es ist ferner ein gemeinsamer Dampferzeuger vorgesehen. Bei einem solchen System kann mittels einer einzigen geregelten Heizquelle Dampf erzeugt werden, der innerhalb eines geschlossenen Systems an jeder Stelle die gleiche Temperatur hat. Damit ist sichergestellt, daß an jedem Punkt des Systems unabhängig von Wärmeverlusten an die Umgebung durch die aufgrund der Kondensation freiwerdende Kondensationsenergie wieder eine Temperaturerhöhung stattfindet, ohne daß die durch die Heizquelle vorgegebene Temperatur überschritten wird. Mit diesem Heizsystem können auch kompliziert strukturierte Oberflächen, wie sie durch Rohrbögenverteiler und Übergänge entstehen, sowie lange Schmelzleitungen bei sehr großen Synthesefaseranlagen beheizt werden.

Abgesehen davon, daß die Anordnung der schmelze- und heizdampfführenden Leitungen dieser bekannten Schmelzspinnanlagen eine erhebliche Bauhöhe der Gesamtanlage einschließlich eines großen Platzbedarfes benötigen, muß bei der Konstruktion jedoch berücksichtigt werden, daß das entstehende Kondensat von jeder Stelle innerhalb des Systems ablaufen kann, ohne daß sich Pfützen oder Sümpfe bilden. Dies würde die direkte Dampfkondensation an den zu bezeizenden Flächen verhindern und zu Temperaturunterschieden führen.

Nachteilig bei diesen Systemen ist der große sicherheitstechnische Aufwand, da aufgrund des normalerweise in diesen Systemen herrschenden Überdruckes Sicherheitsabschaltungen und Überdruckventile notwendig sind, und, je nach den Regelungen der Sicherheitsbehörden der verschiedenen Länder für die Herstellung nur zu gelassene Kesselstähle und speziell geprüfte Schweiß-Facharbeiter eingesetzt werden dürfen. Dies verteuert besonders kleinere Anlagen deutlich, die heute mehr und mehr eingesetzt werden, um in der Faserproduktion entsprechend den Marktbedürfnissen flexibel sein zu können.

Ein weiterer Nachteil dieser dampfbeheizten Systeme ist, daß diese Anlagen im Unterdruckbereich betrieben werden müssen, sobald die erforderliche Heiztemperatur den Siedepunkt des Dampfmediums unterschreitet. Dies führt dazu, daß durch Undichtigkeiten, wie sie an Ventilen oder Flanschverbindungen auftreten können, Luft eingesaugt wird, die sich im oberen Bereich des Systems sammelt und ein Luftkissen bildet, das seinerseits wieder den Zutritt von Dampf zu den zu beheizenden Flächen verhindert. Hier muß sehr häufig entlüftet werden, was zu einem erhöhten Wartungsaufwand führt.

Bei niedrigeren Temperaturen findet man deshalb sehr oft flüssigkeitsbeheizte Systeme, in denen entweder die Flüssigkeit, meist ein spezielles Wärmeträgeröl, in einem Kreislauf zirkuliert oder, ähnlich wie bei einer Friteuse, sämtliche zu beheizenden Teile in einen ölgefüllten Kessel vorgesehen sind. In Systemen mit einer Zirkulation sind entsprechende Bohrungen und Einbauten zur Vermeidung toter Ecken vorzusehen, die vor allem bei größeren Systemen sehr aufwendig sein können und zu einer schlechten Wärmeübertragung führen. Zudem kommt es bei Zirkulationssystemen noch zu dem Nachteil, daß die Flüssigkeit mit zunehmender Weglänge immer mehr Temperatur verliert und dadurch eine theoretische Temperaturkonstanz aller zu beheizenden Teile nicht mehr möglich ist. In Systemen nach dem Friteusenprinzip entsteht eine interne Zirkulation infolge der Verringerung der Flüssigkeitsdichte beim Aufheizen, die oft durch zusätzliche Strömungserzeuger noch unterstützt wird. Trotzdem kann es vorkommen, daß vorallem im unteren Bereich Teile der Anlage nicht ausreichend von der Strömung erreicht und daher Temperaturverluste nicht ausgeglichen werden. In beiden Systemen werden außerdem, wie bereits erwähnt, Wärmeträgeröle benutzt, die in regelmäßigen Abständen zu wechseln und somit zu entsorgen sind. Die Möglichkeiten hierzu sind nicht an jedem Land in gleicher Art und Weise gegeben.

Hier sind direkt beheizte Systeme, bei denen die Wärme durch Strahlung oder Wärmeleitung mittels festem Material an die zu beheizenden Teile übertragen wird, klar im Vorteil. Hierfür werden meist aufgeschraubte Heizplatten, -bänder oder -winkel, in einigen Fällen auch eingeschobene Heizpatronen, verwendet. Diese Heizelemente erfordern jedoch geometrisch einfache und fein bearbeitete Flächen, auf die die Heizelemente aufgebracht werden, damit die Wärme gleichmäßig über die ganze Kontaktfläche in die zu beheizenden Teile strömen kann. Spalte führen zu lokalen Isolierungen, die den Wärmeübergang blockieren, so daß an diesen Stellen die Wärmeverluste der zu beheizenden Teile nicht mehr ausgeglichen werden. Umgekehrt erhöht sich die Heiztemperatur an diesen Stellen und führt zu einer Zerstörung der Heizung durch Überhitzung.

Durch die EO 07 22 003 A 2 ist eine Heizeinrichtung zur Beheizung mehrteiliger Spinnblöcke bekannt. Auch hier wird das Problem einer gleichmäßigen Beheizung angegangen, und zwar in der Weise, daß die Heizeinrichtung den Spinnblock von innen beheizt mit einem oder mehreren Heizelementen von länglicher Form, die in gleichmäßiger Verteilung um die Achse der Hauptflußrichtung der Schmelze so angeordnet sind, daß sie den gesamten Spinnblock durchdringen und zum Wechsel des Filters oder der Düsenplatte oder zum Zwecke der Wartung entnommen werden können. Nachteilig dabei ist jedoch, daß die Form des Heizelements im Rahmen der thermischen Ausdehnung der Materialien möglichst mit der Form des Hohlraumes übereinstimmen muß, in den es eingesetzt werden soll. Spalte und Hohlräume müssen auf jeden Fall vermieden werden, da sie den Wärmeübergang zwischen Heizelement und Spinnblock nachteilig beeinflussen. Dies bedingt eine enge Tolerierung der Heizelemente und ihrer Aufnahmen. Der Herstellungsaufwand für derartige Vorrichtungen ist beträchtlich, und dennoch können Wärmeisolationsbrücken nicht vollkommen verhindert werden.

Verschmutzungen durch überlaufende Schmelze und sich ablagernde Kondensate führen über die Zeit zu einer Verschlechterung des Wärmeübergangs zwischen den Heizelementen und den zu beheizenden Teilen. Dies versucht die Regelung durch die Erhöhung der Heiztemperatur des Heizelementes auszugleichen, was zu verstärkten Verlusten an die Umgebung und zu einer Verschlechterung der Temperaturgleichmäßigkeit des zu beheizenden Teils und letztlich auch zu Beeinträchtigungen der Synthesefaserherstellung führt. Als Folge dieser ungleichmäßigen Beheizung ist in der Praxis auch relativ häufig ein Durchbrennen der Heizung zu beobachten.

Zum Ausgleich unterschiedlich starker Wärmeverluste oder unterschiedlich großer Wärmeübergangsflächen wird eine elektrische Beheizung in der Regel in mehrere Heizzonen unterteilt. Dies ermöglicht die lokale Anpassung der Beheizung an den jeweiligen Wärmebedarf und trägt somit zur Verhinderung der Temperaturunterschiede bei, führt aber zu einem recht hohen regeltechnischen Aufwand. Überlastungen der Heizung durch blockierten Wärmeübergang können dadurch jedoch nicht vermieden werden.

Durch die DE 43 25 580 A 1 wird eine konstruktive Gestaltung des Pumpenblocks eines Spinnbalkens zum Schmelzspinnen synthetischer Polymerer beschrieben. Um das Problem der gleichmäßigeren Temperierung der Polymerschmelze zu lösen, soll die Zuleitung zur Spinnpumpe und die Verbindungsrohre zwischen der Spinnpumpe und den Düsenblöcken in Metall eingegossen werden, dessen Schmelztemperatur im Bereich von 500 - 1000° C liegt und eine bestimmte Wärmeleitfähigkeit aufweist. Das Problem der gleichmäßigen Beheizung unter Vermeidung der oben geschilderten Nachteile bei der Übertragung der Heizwärme auf die schmelzeführenden Teile ist hier nicht gelöst.

Aufgabe der vorliegenden Erfindung ist die Schaffung einer Beheizung einer Extrudiervorrichtung, die die Nachteile des Standes der Technik vermeidet und eine gleichmäßige Temperierung auf einfache Weise gewährleistet. Diese Aufgabe wird erfindungsgemäß durch die Merkmale des Anspruch 1 gelöst. Durch das Vergießen des kompletten Spinnkopfes mit einem gut wärmeleitfähigen Werkstoff, vorzugsweise Aluminium, zusammen mit den Heizelementen und den schmelzeführenden Teilen, sind optimale Wärmeübergänge, sowohl von der Wärmequelle in den Gußmantel als auch vom Gußmantel in den Spinnkopf, sichergestellt. Der Guß paßt sich recht einfach jeder noch so komplizierten Außenkontur an und vermeidet somit unnötige Materialanhäufungen am zu beheizenden Teil, die man zur Erzielung geometrisch einfacher Flächen vorsehen müßte, um die üblichen Heizplatten anbringen zu können. Aufwendige Nachbearbeitungen bei enger Tolerierung zur Begradigung dieser Fläche, von Übergängen oder auch von Aufnahmebohrungen für Heizelemente können entfallen.

Die Erfindung verhindert durch den direkten metallischen Kontakt der eingegossenen Teile das Eindringen von Schmelze oder Kondensaten in Zwischenräume, wodurch ein Durchbrennen der Heizelemente nahezu ausgeschlossen ist. Dadurch, daß keine geometrische Glättung der Form der Teile nötig ist, ist die Wärmeübergangsfläche zwischen dem Gußmantel und dem zu beheizenden Teil größer, was zu einer Verbesserung des Wärmeübergangs führt. Die einwandfreie Wärmeabfuhr von den Heizelementen ohne Wärmestau verhindert eine Überhitzung und bewirkt eine Verlängerung der Lebenszeit der Heizelemente.

Klemmungen und Halterungen für die Heizelemente können entfallen, da diese durch den Gußmantel fixiert und gehalten werden.

Schließlich wird der Raumbedarf eines Spinnbalkens auf diese Weise verkleinert, da die Erzeugung und Verteilung der Wärme in einen nur ca. 30 - 40 mm starken Gußmantel erfolgt, um den nur noch eine Isolation angebracht werden muß.

Weitere Einzelheiten der Erfindung werden anhand der Figuren beschrieben:
- Fig. 1: zeigt einen Spinnkopf mit eingegossenen Heizelementen und Schmelzeleitungen von der Rückseite
- Fig. 2: zeigt den Spinnkopf gemäß Fig. 1 in der Seitenansicht
- Fig. 3: zeigt einen Spinnkopf mit einem gebohrten Gußblock als Grundkörper von der Frontseite
- Fig. 4: zeigt die Seitenansicht zu Fig. 3
- Fig. 5: zeigt einen Spinnkopf mit von Heizelementen umgebenem Block als Grundkörper in schematischer Perspektive
- Fig. 6: zeigt die Beheizung eines Spinnkopfes mittels Induktionsheizung in schematischer Perspektive
- Fig. 7: zeigt eine Schmelzezuleitung mit eingegossenen Heizelementen in schematischer Perspektive
- Fig. 8: zeigt ein Düsenpaket mit eingegossenen Heizelementen in schematischer Perspektive

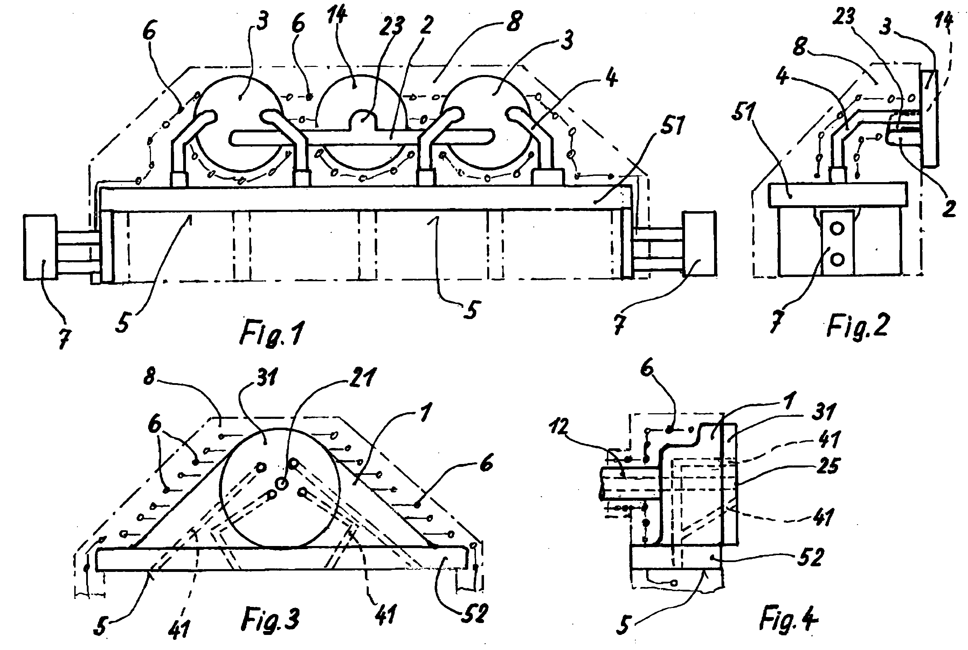

Die Figuren 1 und 2 zeigen einen Spinnkopf mit zwei Spinnpumpenaufnahmen 3 und vier Düsenpaketaufnahmen 5 sowie einem Anschlußflansch 14 für die Schmelzezuleitung 23. Es ist ferner eine Verbindungsleitung 2 vorgesehen, über die die Spinnpumpenaufnahmen 3 mit der Schmelzezuleitung 23 und deren Anschlußflansch 14 verbunden sind. Der Grundkörper ist durch die Spinndüsenaufnahmeplatte 51, den Schmelzeleitungsflansch 14, die Pumpenplatten 3 sowie die sie mit den Düsenpaketaufnahmen 5 verbindenden Verteilerkanäle 4 und die die Pumpenplatten 3 mit der Schmelzezuleitung 23 verbindende Leitung 2 sowie den Schmelzeleitungsflansch 14 zu einem Rahmen zusammengefügt. Vorzugsweise ist dieser Rahmen als Schweißkonstruktion und unter Verwendung von Edelstahl ausgeführt. Es kann auch ein anderer Stahl verwendet werden, vorausgesetzt dieser verträgt die hohen Eingießtemperaturen. Den schmelzführenden Teilen 2, 23 und 4 sind Heizelemente 6 zugeordnet, die von diesem Rahmen getragen und in ihrer Lage bestimmt werden. Im aufgeführten Beispiel handelt es sich um elektrische Widerstands-Heizelemente, die durch einen Klemmenkasten 7 an die Stromversorgung angeschlossen sind.

Sowohl die Verbindungsleitung 2 als auch die Verteilerkanäle 4, welche die Spinndüsenaufnahmeplatte 51 mit der Pumpenplatte 3 verbinden, sowie auch die Schmelzezuleitung 23 mit dem Anschlußflansch 14 werden zusammen mit den Heizelementen 6 in eine Ummantelung 8 eingegossen. Dieser Gußmantel 8 erstreckt sich bis über die spinndüsenaufnahmeplatte 51 hinaus und bildet gleichzeitig die Spinndüsenaufnahmen 5 zur Aufnahme der Düsenpakete. Dieser Gußmantel 8 besteht aus gut wärmeleitendem Material, beispielsweise Aluminium oder einer Aluminiumlegierang. Die Heizelemente 6 sind in Nähe der schmelzeführenden Teile 2 und 4 angeordnet und übertragen über den Gußmantel 8 direkt und ohne Spalten die Wärme auf diese Verteilerkanäle 4, die Verbindungsleitung 2 und die Schmelzezuleitung 23. Auch auf die Pumpenplatte 3, den Anschlußflansch 14 sowie die Düsenaufnahmeplatte 51 wird durch die Heizelemente 6 über den Gußmantel 8 direkt die Wärme übertragen. Es entsteht somit ein guter, gleichmäßiger Wärmeübergang von den Heizelementen 6 auf diese schmelzeführenden Teile.

In den Figuren 3 und 4 ist eine andere Ausführung eines Spinnkopfes dargestellt, der eine Spinnpumpenaufnahme 31 sowie vier Düsenaufnahmen 5 aufweist. Der Grundkörper besteht aus einem gegossenen Block 1, in welchen Verteilerkanäle 41, die Verbindungsöffnung 25 sowie die Schmelzezuleitung 12 durch Bohren oder Fräsen eingearbeitet sind. Über die Schmelzezuleitung 12, die in die Verbindungsöffnung 25 mündet, wird die Schmelze der (nicht dargestellten) Spinnpumpe zugeführt, welche die Schmelze über die Verteilerkanäle 41 zu den Düsenaufnahmen 5 und Düsenpaketen drückt. Wie aus Figur 4 ersichtlich, ist der Gußblock 1 so gestaltet, daß er die Verteilerkanäle 41 sowie die Pumpenplatte 31 und Düsenaufnahmeplatte 52 einschließt. Die Wandstärken des Gußblockes 1 sind auf die erforderliche Dicke abgestellt, so daß Materialanhäufungen an den zu beheizenden Teilen vermieden sind. Lediglich für die Aufnahmen 5 für die Spinndüsen als auch für die Spinnpumpe (nicht gezeigt) müssen die Flächen der Pumpenplatte 3 und der Düsenaufnahmeplatte 52 bearbeitet werden. Die übrigen Flächen können roh bleiben. Bei der Ausführung in Figur 4 ist in diesen Gußblock 1 auch die Schmelzeleitung 12 miteinbezogen.

Dieser Block 1 wird mit Heizelementen 6 umgeben, die dann zusammen in den Mantel 8 eingegossen werden. An Stellen höheren wärmebedarfs sind die Heizelemente 6 in engeren Abständen angeordnet und umgekehrt, um eine optimale Temperaturverteilung zu bekommen. Für das Gießen der Ummantelung 8 wird, wie oben bei der Ausführung gemäß Figur 1 und 2 beschrieben, gut wärmeleitendes Material benutzt, welches die von den Heizelementen 6 abgegebene Wärme auf den Block 1 und die darin enthaltenen schmelzeführenden Teile überträgt. Da sich das Material des Gußmantels 8 sowohl mit dem Grundkörper 1 als auch den Heizelementen 6 durch Ankleben verbindet, ist ein verlustloser Wärmeübergang gewährleistet.

Gemäß einer anderen Ausführung können die Verteilerkanäle 41 sowie die verbindungsöffnung 25 und die Schmelzezuleitung 12 anstelle durch mechanische Bearbeitung auch mittels Gußkernen in den Block 1 eingegossen sein.

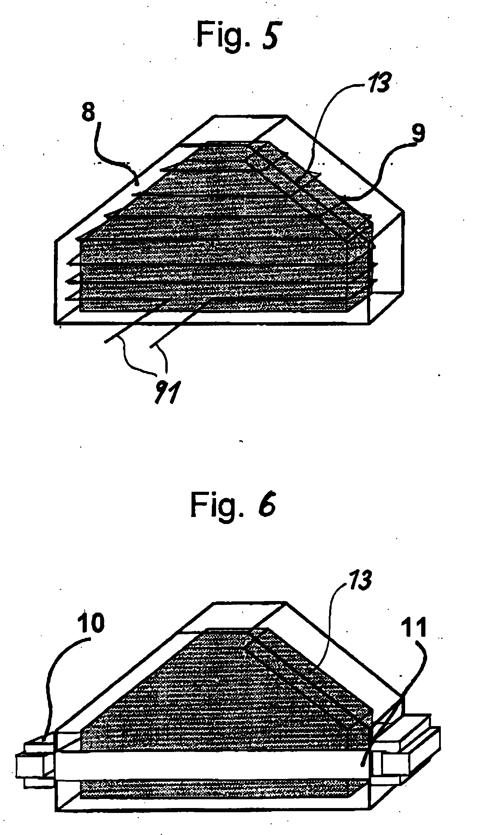

Figur 5 zeigt in schematischer Perspektive einen Stahlblock 13, der mit Heizschlangen 9 umgeben ist. Hierbei müssen entsprechende Biegeradien beachtet werden, um eine Beschädigung der Heizschlangen 9 zu vermeiden. Die Unversehrtheit der Heizschlangen wird nach dem Verlegen, jedoch vor dem Eingießen in einem Funktionstest zweckmäßiger Weise überprüft. Diese Heizschlangen 9 können sowohl elektrisch beheizbare Elemente, als auch mit Flüssigkeit gefüllte Rohre zum Beheizen des Stahlblocks 13 sein. Diese Heizelemente 9 werden in einen Gußmantel 8 eingegossen, der den Stahlblock 13 umgibt. Sind die Heizelemente 9 als Flüssigkeitsheizschlangen ausgeführt, so ist zwar der sicherheitstechnische Aufwand etwas größer, allerdings wird durch das Eingießen ein einwandfreier und günstiger Wärmeübergang geschaffen. Durch die Heizschlangen 9 sind stets gleiche Strömungsverhältnisse gegeben, so daß auch hiermit die oben geschilderten Nachteile bekannter Vorrichtungen vermieden werden. Um bei längeren Leitungswegen dem Absinken der Temperatur der Heizflüssigkeit entgegenzuwirken, können die Heizschlangen 9 auch als zwei parallel verlegte Rohre ausgeführt sein, wobei die Heizflüssigkeit diese im Gegenstrom durchfließt. Beide Anschlüsse 91 dienen mit einem Rohr als Zulauf für den einen Kreislauf und mit dem zweiten Rohr als Rücklauf für den anderen Kreislauf.

Figur 6 zeigt eine andere Beheizung des Stahlblocks 13 durch eine Induktionsheizung, ebenfalls in schematischer Perspektive. Um den Stahlblock 13 sind ein oder auch mehrere Kurzschlußringe 11 gelegt, in denen durch Induktoren 10 ein Kurzschlußstrom erzeugt wird, der den Kurzschlußring 11 auf eine gewünschte Temperatur bringt. Auch hier ist der Kurzschlußring 11 in einen Mantel 8 eingegossen, der den Stahlblock 13 umgibt, so daß ein einwandfreier Wärmeübergang vom Kurzschlußring 11 auf den die schmelzeführenden Teile enthaltenden Stahlblock 13 gewährleistet ist, da Spalte durch mangelhafte Anlage und unkontrollierte Wärmebrücken vermieden werden. Durch die gleichmäßige Abfuhr der erzeugten Wärme werden die Kurzschlußringe 11 an keiner Stelle überbelastet, so daß auch ihre Lebensdauer erheblich verbessert ist.

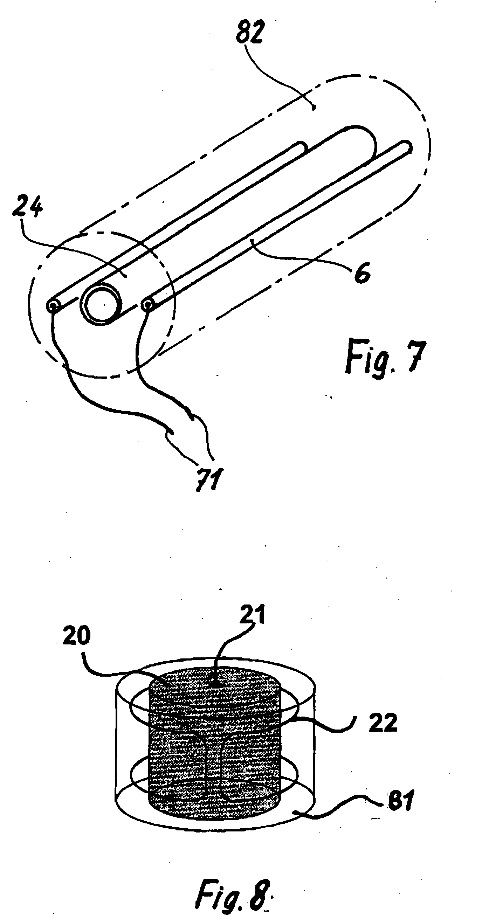

Die direkte Beheizung der schmelzeführenden Elemente bezieht sich nicht nur auf den Grundkörper des Spinnkopfes. Es kann sein, daß die Einbeziehung der Schmelzezuleitung als auch der Düsenblöcke in den Grundkörper sich zu aufwendig gestaltet. Insbesondere wenn die Vorrichtung größere Dimensionen annimmt, ist es zweckmäßig, diese aus der Schmelzezuleitung, einem oder mehreren Extrudierblöcken und einem oder mehreren Düsenblöcken zusammenzusetzen. Jedem dieser Teile sind jedoch Heizelemente zugeordnet, die eine den Erfordernissen dieses schmelzeführenden Teiles angepaßte Beheizung durchführen. Figur 7 zeigt beispielsweise schematisch eine Schmelzezuleitung 24, welcher elektrische Widerstandsheizelemente 6 symmetrisch und parallel zugeordnet sind, die über Zuleitungen 71 mit Strom versorgt werden und die in den die Schmelzezuleitung 24 umgebenden Gußmantel 82 eingegossen sind. Diese Heizelemente 6 können aber auch in Art einer Wendel um die Schmelzezuleitung 24 angeordnet sein, wobei ein oder mehrere Heizelemente 6 und diese auch in verschiedener Dichte durch engere oder weitere Wendel eingesetzt sein können. Ferner kann den Heizelementen 6 der Schmelzezuleitung 2 auch eine vom übrigen Spinnkopf unabhängige Temperatursteuerung zugeordnet sein, um entsprechend dem Wärmebedarf die richtige Temperatur der Schmelze aufrechtzuerhalten.

Figur 8 zeigt ein Düsenpaket 20, das an der Düsenaufnahme 5 befestigt wird und über eine Verbindungsöffnung 21 an die Verteilerkanäle 4 oder 41 angeschlossen ist. Um eine einwandfreie Beheizung der Schmelze bis in das Düsenpaket 20 vor dem Austritt aus den Spinndüsen zu gewährleisten, ist das Düsenpaket 20 mit Heizelementen 22 umgeben, die in den Gußmantel 81 eingegossen sind, der den Düsenblock 20 umgibt. Die Heizelemente 22 können sowohl elektrische Widerstandsheizelemente als auch über Induktoren beheizbare Kurzschlußringe sein. Die Beheizung ist auch in diesem Fall unabhängig von der Beheizung des Grundkörpers des Spinnkopfes steuerbar.

Die Erfindung kann mit Erfolg auch bei anderen Ausführungen des Spinnkopfes angewandt werden. Beispielsweise können die Düsenpakete in den Rahmen oder Grundkörper, und damit auch in den Gußmantel 8 derart einbezogen sein, daß lediglich die Filter und die Düsenplatte auswechselbar sind. Statt der Spinndüsenaufnahme 5 ist ein kleiderbügelförmiger Hohlraum im Grundkörper vorgesehen, der durch die Düsenplatte verschlossen wird. Dieser Hohlraum ist in den Grundkörper einbezogen, mit Heizelementen umgeben, die gleichfalls in den Gußmantel eingegossen sind.

Die erfindungsgemäße Vorrichtung ist beispielsweise an Extrudiervorrichtungen zur Herstellung von Fäden beschrieben worden. Sie kann jedoch mit gleichem Vorteil bei Extrudiervorrichtungen zur Herstellung von Folien oder anderen Extrudaten eingesetzt werden.

### Bezugszeichenliste

- 1,13: Block (Grundkörper im Spinnkopf)
- 2: Verbindungsleitung
- 3,31: Pumpenplatte, Spinnpumpenaufnahme
- 4,41: Verteilerkanäle
- 5: Spinndüsenaufnahme
- 51: Spinndüsenaufnahmeplatte
- 52: Spinndüsenaufnahmeplatte
- 6: Heizelemente
- 7: Klemmenkasten f. Heizelementeanschluß
- 71: Anschlußleitung Heizelemente
- 8,81,82: Gußmantel
- 9: Heizschlangen
- 91: Anschlüsse Heizschlangen
- 10: Induktoren
- 11: Kurzschlußring
- 12: Schmelzezuleitung
- 20: Düsenpaket
- 21,25: Verbindungsöffnung
- 22: Heizelemente
- 14: Schmelzeleitungsflansch
- 23,24: Schmelzezuleitung

## Patentansprüche

1. Die Erfindung betrifft eine Vorrichtung zum Extrudieren eines geschmolzenen polymeren Materials beispielsweise zu einer Vielzahl von Fäden oder auch zu Folien oder sonstigen Extrudaten, wobei diese Vorrichtung Verteilerkanäle, über die das geschmolzene Material Extrudierdüsen zugeführt wird, sowie Heizeinrichtungen aufweist, um den Materialfluß bis zum Austritt aus den Extrudierdüsen auf der für das Extrudieren erforderlichen Temperatur zu halten, ferner wenigstens einen Pumpenblock einschließlich einer Schmelzezuleitung zur Extrudierpumpe und Verteilerkanälen zwischen Extrudierpumpe und mindestens einer Extrudierdüse, **dadurch gekennzeichnet, daß** ein Grundkörper (1; 13) vorgesehen ist, der mindestens die Verteilerkanäle (4; 41), die Aufnahmen (5, 51, 52; 3, 31) für die Extrudierpumpe und für die Extrudierdüsen (20) enthält, und Heizelemente (6; 9; 11) an den Schmelze führenden Teilen (4; 41; 2; 12) angeordnet sind, die in einen den Grundkörper (1; 13) umgebenden Mantel (8) eingegossen sind.

2. Vorrichtung nach Anspruch 1, **dadurch gekennzeichnet, daß** der Grundkörper aus einem Block (1) besteht, der gegossen ist.

3. Vorrichtung nach Anspruch 2, **dadurch gekennzeichnet, daß** in den Grundkörper (1) die Verteilerkanäle (41) eingegossen sind.

4. Vorrichtung nach einem der Ansprüche 1 oder 2, **dadurch gekennzeichnet, daß** der Grundkörper aus einem Block (1; 13) besteht, in welchen die Verteilerkanäle (41) und Aufnahmen (3; 5) für wenigstens eine Extrudierpumpe und für wenigstens ein Düsenpaket eingearbeitet sind.

5. Vorrichtung nach Anspruch 1, **dadurch gekennzeichnet, daß** der Grundkörper aus einem Rahmen besteht, der mindestens die Verteilerkanäle (4) enthält, durch welche die Anordnung der Heizelemente (6) bestimmt ist, die gemeinsam mit den Verteilerkanälen (4) in eine Ummantelung (8) eingegossen sind.

6. Vorrichtung nach einem oder mehreren der Ansprüche 1 bis 5, **dadurch gekennzeichnet, daß** eine Verbindungsleitung (2) vorgesehen ist, die die einzelnen Spinnpumpen mit der Schmelzezuleitung (12) verbindet, wobei dieser Verbindungsleitung (2) Heizelemente (6) zugeordnet sind, die zusammen mit der Verbindungsleitung (2) in eine Ummantelung (8) eingegossen sind.

7. Vorrichtung nach einem oder mehreren der Ansprüche 1 bis 6, **dadurch gekennzeichnet, daß** die Schmelzezuleitung (12, 23) in den Grundkörper (1) einbezogen ist.

8. Vorrichtung nach einem oder mehreren der Ansprüche 1 bis 7, **dadurch gekennzeichnet, daß** dem Düsenpaket (20) separate Heizelemente (22) zugeordnet sind, die zusammen mit dem Düsenpaket (20) in eine Ummantelung (81) eingegossen sind.

9. Vorrichtung nach einem oder mehreren der Ansprüche 1 bis 8, **dadurch gekennzeichnet, daß** der Düsenpaket in den Grundkörper einbezogen ist.

10. Vorrichtung nach einem oder mehreren der Ansprüche 1 bis 5, 7 und 9, **dadurch gekennzeichnet, daß** die Vorrichtung aus der Schmelzezuleitung (12, 23), einem oder mehreren Extrudierblöcken (1) und einem oder mehreren Düsenblöcken (20) zusammengesetzt ist, wobei jeder dieser Teile mit Heizelementen (6; 9; 22) ausgestattet ist.

11. Vorrichtung nach einem oder mehreren der Ansprüche 1 bis 10, **dadurch gekennzeichnet, daß** für die Heizung (6; 9; 22) elektrische Widerstands-Heizelemente vorgesehen sind.

12. Vorrichtung nach einem oder mehreren der Ansprüche 1 bis 10, **dadurch gekennzeichnet, daß** eine Induktionsheizung (10, 11) vorgesehen ist.

13. Vorrichtung nach einem oder mehreren der Ansprüche 1 bis 10, **dadurch gekennzeichnet, daß** als Heizung Heizschlangen (9) vorgesehen sind, die aus zwei parallel verlegten Rohren bestehen, welche von der Heizflüssigkeit im Gegenstrom durchflossen werden.

14. Verfahren zur Herstellung einer Vorrichtung zum Extrudieren eines geschmolzenen polymeren Materials beispielsweise zu einer Vielzahl von Fäden oder auch zu Folien oder sonstigen Extrudaten, wobei diese Vorrichtung Verteilerkanäle, über die das geschmolzene Material Extruidierdüsen zugeführt wird, sowie Heizeinrichtungen aufweist, um den Materialfluß bis zum Austritt aus den Extrudierdüsen auf der für das Extrudieren erforderlichen Temperatur zu halten und ferner wenigstens ein Pumpenblock einschließlich einer Schmelzezuleitung zur Extrudierpumpe und Verteilerkanäle zwischen Extrudierpumpe und mindestens einer Extrudierdüse vorgesehen sind, **dadurch gekennzeichnet, daß** die Aufnahmen (3, 31; 5, 51, 52) für die Extrudierpumpe und für die Extrudierdüsen (20) mit den Verbindungsleitungen (2) und Verteilerkanälen (4, 41) zu einem Grundkörper (1, 13) zusammengefaßt und in Nähe der schmelzeführenden Teile (4, 41; 2, 12, 23, 24) Heizelemente (6, 9, 11) angeordnet werden, die zusammen mit dem Grundkörper (1, 13) eingegossen werden.

15. Verfahren nach Anspruch 14, **dadurch gekennzeichnet, daß** die Schmelzezuleitungen (23, 24) in den Grundkörper (1, 13) einbezogen werden.

16. Verfahren nach einem der Ansprüche 14 oder 15, **dadurch gekennzeichnet, daß** die Verteilerkanäle (41), die Verbindungsöffnung (25) und/oder die Schmelzezuleitung (12) mechanisch in einen als Grundkörper dienenden Gußblock (1, 13) eingearbeitet werden, der mit Heizelementen (6) umgeben und mit diesen zusammen vergossen wird.

17. Verfahren nach einem oder mehreren der Ansprüche 14 bis 16, **dadurch gekennzeichnet, daß** für das Vergießen ein gut wärmeleitendes Material verwendet wird.
